# FASCICULE DE BREVET EUROPEEN

(11) **EP 3 123 387 B1**
(45) Date de publication et mention de la délivrance du brevet: **13.03.2019**
(21) Numéro de dépôt: 15717564.7
(22) Date de dépôt: 25.03.2015
(51) Int. Cl.: G06F 21/51, G06F 21/57, G06F 21/64, G06F 21/77

(54) **SÉCURISATION DU CHARGEMENT DE DONNÉES DANS UNE MÉMOIRE NON-VOLATILE D'UN ÉLÉMENT SÉCURISÉ**
SICHERN DES LADENS VON DATEN IN EINEN NICHTFLÜCHTIGEN SPEICHER EINES SICHEREN ELEMENTS
SECURING OF THE LOADING OF DATA INTO A NONVOLATILE MEMORY OF A SECURE ELEMENT

(30) Priorité: 25.03.2014 FR 1452519
(43) Date de publication de la demande: 01.02.2017
(73) Titulaire: IDEMIA France, 92400 Courbevoie (FR)
(72) Inventeur: NEROT, Sébastien, F-92700 Colombes (FR)
(74) Mandataire: Santarelli
(86) Numéro de dépôt international: PCT/FR2015/050758
(87) Numéro de publication internationale: WO 2015/145071

(56) Documents cités:
- US-A1- 2012 246 442
- US-B1- 6 233 683
- US-B1- 8 239 686

## Description

### DOMAINE DE L'INVENTION

L'invention concerne le domaine des éléments sécurisés tels que les cartes à puce. En particulier, l'invention fournit des procédés et dispositifs pour sécuriser le chargement de données dans une mémoire non-volatile d'un élément sécurisé.

### CONTEXTE DE L'INVENTION

Un élément sécurisé, par exemple une carte à puce, se présente typiquement sous la forme d'un microcircuit, intégré de manière amovible dans un dispositif électronique hôte, ou en variante embarqué (par exemple soudé) dans un tel dispositif électronique. A titre d'exemple, un élément sécurisé peut être un eSE (« embedded secure element » pour élément sécurisé embarqué) ou un eUICC (« embedded Universal Integrated Circuit Card » pour carte de circuit intégré universelle et embarquée).

Un élément sécurisé comprend un processeur qui lui est propre, différent du processeur du dispositif électronique hôte dans lequel il est intégré ou embarqué, et comprend une mémoire non-volatile pour le stockage de programmes d'ordinateurs exécutables par le processeur.

Une zone non modifiable de la mémoire non-volatile stocke un programme dit « initial » ou « de base » généralement de faible taille, par exemple un programme d'amorce (*Boot Loader* en anglais) mémorisé par le fabricant de l'élément sécurisé. Le programme initial offre des fonctionnalités permettant à un intermédiaire, tel un opérateur ou un fournisseur d'éléments sécurisés à des utilisateurs, de personnaliser l'élément sécurisé en chargeant, dans une zone particulière de la mémoire non-volatile définie par le programme initial, des éléments logiciels généralement constitués de code compilé ou interprété (c'est-à-dire des mots de code ou « bytecodes » en langage ou code machine directement exécutables par un processeur), comme par exemple un système d'exploitation ou des applications. Ce programme initial est par exemple associé à un système d'exploitation particulier qui comprend notamment un module de gestion de ports permettant de communiquer avec ce programme initial, un module de gestion de la mise-à-jour de la mémoire, un interpréteur de commandes, et des modules de sécurité qui assurent la sécurité de ce programme initial. Ce système d'exploitation particulier est personnalisé par le fabricant de l'élément sécurisé, et sa modification n'est pas permise à l'issue de sa personnalisation.

De manière générale, ce programme initial est le premier programme mis en oeuvre lors du démarrage de l'élément sécurisé, c'est-à-dire avant tout autre programme qui serait présent en mémoire de l'élément sécurisé. Ce programme est indispensable à la mise en oeuvre d'autres programmes de l'élément sécurisé.

La zone particulière de la mémoire non-volatile précitée est entièrement gérée par le programme initial, qui est le seul à pouvoir modifier les bornes de la zone particulière, ainsi que son contenu.

Plus précisément, ces bornes peuvent être mémorisées dans des registres du programme initial, ou alternativement, être le résultat de l'exécution, par le programme initial, de commandes les définissant. Dans tous les cas, la définition ainsi que toute modification des bornes ne peuvent résulter que d'une action du programme initial.

De plus, seul le programme initial peut activer (ou désactiver) la zone particulière de sorte à autoriser (ou interdire) l'exécution de son contenu.

Généralement, la zone précitée est dédiée au stockage de code compilé ou interprété, à ce titre, elle sera appelée par la suite « zone mémoire de code ». Il est particulièrement important que la zone mémoire de code ne soit pas modifiée lors de l'exécution des éléments logiciels qu'elle contient, afin de garantir l'intégrité des applications et système d'exploitation que ces éléments logiciels mettent en oeuvre dans l'élément sécurisé.

Au cours de la vie de l'élément sécurisé, d'autres éléments logiciels peuvent être chargés dans la zone mémoire de code. Il s'agit par exemple d'une nouvelle version d'un élément logiciel déjà stocké (mise à jour de l'élément logiciel) ou de nouvelles données. Afin de garantir, avant activation, c'est-à-dire avant d'autoriser l'exécution, l'intégrité et la légitimité de ces éléments logiciels ultérieurement chargés dans la zone mémoire de code, des mécanismes de vérification sont mis en oeuvre, typiquement par le programme initial.

Par exemple, le document FR 2 993 682 décrit un programme d'amorce exécuté lors du démarrage de l'élément sécurisé, permettant d'obtenir le code d'une nouvelle version d'un système d'exploitation auprès d'un dispositif de mise à jour, lorsque le système d'exploitation installé devient obsolète. L'intégrité du code de cette nouvelle version de système d'exploitation est vérifiée par le programme d'amorce bloc de code par bloc de code, ainsi que dans son ensemble, avant d'autoriser l'activation de la nouvelle version du système d'exploitation.

Toutefois, la vérification d'intégrité ne concerne que les éléments logiciels nouvellement reçus et chargés.

Ainsi, un élément logiciel, type logiciel malveillant (*malware* en anglais), mémorisé dans la zone mémoire de code par une personne malveillante préalablement au chargement d'un nouvel élément logiciel n'est pas détecté par le programme d'amorce au cours de cette vérification d'intégrité, puisque celle-ci porte uniquement sur l'élément logiciel nouvellement chargé. Il existe donc une faille de sécurité.

De même, une faille de sécurité existe lorsque une personne malveillante modifie ou endommage, par exemple par attaque laser, un élément logiciel déjà stocké dans cette zone mémoire de code. En effet, la vérification d'intégrité sur de nouveaux éléments logiciels chargés ne permet pas de déceler cette modification ou cet endommagement du contenu de la zone mémoire de code.

Il existe donc un besoin d'améliorer le contrôle de la sécurisation de l'élément sécurisé, et notamment de l'intégrité des éléments logiciels lors du chargement de données dans cette zone de mémoire.

Le document US 2012/246442 A1 décrit un procédé pour mettre à jour des données stockées dans un dispositif partitionné. En substance, ce procédé consiste à stocker des données de mise à jour dans une certaine zone de la partition différente de la zone visée, en attendant que l'intégrité de ces données soit vérifiée au moyen d'une signature calculée sur celle-ci. Lorsque la signature des données de mise à jour est valable, ces dernières sont déplacées dans la zone visée au départ. Le changement de zone est effectué via la modification d'un mapping entre une adresse logique affectée à la mise à jour et des adresses physiques pointant vers les différentes zones de la partition.

### RESUME DE L'INVENTION

La présente invention a ainsi pour objet de pallier au moins un de ces inconvénients.

Dans ce contexte, un premier aspect de l'invention concerne un procédé de sécurisation du chargement de données dans une mémoire non-volatile d'un élément sécurisé, ladite mémoire non-volatile comprenant une zone mémoire, dite zone mémoire de code, définie par un programme initial de l'élément sécurisé et dont toute modification est contrôlée uniquement par ledit programme initial, ledit procédé comprenant les étapes suivantes mises en oeuvre par un dispositif externe à l'élément sécurisé :
- obtenir des données à transmettre à l'élément sécurisé, lesdites données représentant une partie seulement de l'espace disponible dans la zone mémoire de code;
- simuler une image de la zone mémoire de code modifiée par le chargement des données obtenues, dans cette zone mémoire de code de l'élément sécurisé ;
- calculer une signature de l'image simulée de la zone mémoire de code dans son ensemble ; et
- transmettre, audit élément sécurisé, les données obtenues et la signature calculée.

Corrélativement, un deuxième aspect de l'invention concerne un procédé de sécurisation du chargement de données dans une mémoire non-volatile d'un élément sécurisé, ladite mémoire non-volatile comprenant une zone mémoire, dite zone mémoire de code, définie par un programme initial de l'élément sécurisé et dont toute modification est contrôlée uniquement par ledit programme initial, ledit procédé comprenant les étapes suivantes mises en oeuvre par l'élément sécurisé :
- recevoir, d'un dispositif externe, des données et une signature, lesdites données représentant une partie seulement de l'espace disponible dans la zone mémoire de code ;
- charger, dans une partie de la zone mémoire de code, le données reçues du dispositif externe ;
- calculer une signature de l'ensemble de la zone mémoire de code une fois les données chargées; et
- vérifier la signature calculée à l'aide de la signature reçue, de sorte à autoriser l'exécution du contenu de la zone mémoire de code uniquement si ces deux signatures sont identiques.

Ainsi, l'invention permet de contrôler l'intégrité des données chargées dans l'élément sécurisé, mais aussi de la zone mémoire de code après le chargement de ces données qui n'occupent qu'une partie seulement de cette zone mémoire.

Cet avantage est obtenu grâce au calcul d'une signature basée sur une simulation de l'image de la zone mémoire dans son ensemble, telle qu'elle résulterait du chargement des données en entier, au lieu de ne prendre en compte que les données chargées comme dans l'art antérieur.

Le dispositif externe simule ainsi l'emplacement et la valeur de chacun des bits de la zone mémoire de code tel qu'il serait modifié ou non par le chargement des données à charger.

Du code inattendu de par sa valeur et/ou son emplacement dans la zone mémoire de code peut alors être détecté au sein de la zone mémoire de code, puisque sa présence induit une différence entre la signature calculée sur l'image simulée au niveau du dispositif externe et la signature calculée par l'élément sécurisé lui-même sur la zone mémoire après le chargement effectif des données.

Ainsi, lorsque la signature calculée par le dispositif à partir d'une image simulée de la zone mémoire de code correspondant à un état de mémoire après le chargement des données, et la signature de la zone de mémoire de code après chargement effectif de ces données diffèrent, l'activation de la zone mémoire de code, c'est-à-dire l'exécution de son contenu, et donc en particulier des données chargées dans l'élément sécurisé, est rendue impossible (i.e. est interdite). Le chargement des données en vue de leur exécution est ainsi sécurisé.

L'invention permet donc de détecter qu'un morceau de code compilé ou interprété (ou plus généralement des données inattendues) a été mémorisé à un emplacement inattendu de la zone mémoire de code, ou n'a pas la valeur attendue.

Par exemple, la présence d'un élément logiciel malveillant, ou encore la modification ou l'endommagement d'un élément logiciel déjà en mémoire lors du chargement des données, est détecté par le programme initial de l'élément sécurisé lors de la vérification de la signature calculée sur l'ensemble de la zone de mémoire obtenue après ledit chargement, à l'aide de la signature prévisionnelle reçue du dispositif externe.

D'autres caractéristiques selon des modes de réalisation de l'invention sont décrites dans les revendications dépendantes.

Dans des modes particuliers de réalisation de l'invention, lesdites données sont transmises à l'élément sécurisé en réponse à une requête d'obtention des données, et la requête d'obtention comprend une information identifiant l'élément sécurisé.

Dans des modes particuliers de réalisation de l'invention, lesdites données sont transmises à l'élément sécurisé en réponse à une requête d'obtention des données, et la requête d'obtention comprend un identifiant unique de configuration logicielle représentative d'une image courante de la zone mémoire de code de l'élément sécurisé.

Ainsi, le dispositif externe est capable de récupérer cette image courante et d'effectuer efficacement la simulation de l'image de la mémoire modifiée par le chargement des données. En effet, la disposition et la valeur actuelle des bits de la zone mémoire de code peuvent être connues avec précision.

Dans des modes particuliers de réalisation de l'invention, la signature est transmise à l'élément sécurisé avec une demande d'activation (i.e. une demande d'autorisation d'exécution) des données obtenues, dans une commande cryptée en provenance du dispositif externe.

Cette disposition sécurise le processus d'autorisation d'exécution car la demande d'activation et la signature nécessaire à la vérification préalable à l'activation (i.e. à l'autorisation d'exécution) sont conjointement protégées.

A noter que l'activation peut être réalisée immédiatement après la vérification positive des signatures, ou se faire ultérieurement, par exemple au prochain démarrage de l'élément sécurisé. Cette activation ultérieure permet de ne pas interrompre le fonctionnement de l'élément sécurisé notamment lorsque les données en question correspondent à une mise à jour de son système d'exploitation ou à une partie de celui-ci.

Alternativement, l'activation pourrait être automatiquement mise en oeuvre par le programme initial, sans qu'une demande d'activation ne soit reçue. L'activation concerne les données éventuellement demandées par requête ou la zone mémoire de code dans son ensemble.

Dans cette alternative, la signature demeure encryptée par le dispositif externe pour sa transmission à l'élément sécurisé.

Dans des modes particuliers de réalisation de l'invention, les données obtenues sont transmises par le dispositif électronique avec une indication d'un emplacement ou d'emplacements dans la zone mémoire de code où les données obtenues doivent être chargées.

L'emplacement de chaque bit de la zone mémoire de code est par conséquent défini par le dispositif externe, ce qui garantit que l'élément sécurisé effectuera un chargement des données identique à ce que le dispositif externe aura simulé à la lumière de ces indications supplémentaires. La signature obtenue à partir de l'image simulée est donc nécessairement identique à celle que devra calculer programme initial de l'élément sécurisé suite au chargement desdites données.

Dans des modes particuliers de réalisation de l'invention, la zone mémoire de code est partitionnée en P sous-zones, et l'étape de calcul de la signature comprend l'obtention d'une signature élémentaire pour chaque sous-zone et l'obtention de la signature pour l'ensemble de la zone mémoire de code, simulée ou non, par composition des P signatures élémentaires.

Dans cette configuration, le calcul d'une signature élémentaire est indépendant du calcul d'une autre signature élémentaire, ce qui permet de réaliser des mises à jour modulaires (par exemple par sous-zones) de la zone mémoire de code avec un calcul d'intégrité (d'une signature élémentaire) restreint aux sous-zones modifiées. Les coûts de calcul peuvent ainsi être substantiellement réduits.

Dans des modes particuliers de réalisation de l'invention, la composition des P signatures élémentaires comprend l'application d'une fonction bijective.

Par exemple, il peut s'agit d'une fonction de type OU exclusif (XOR). Une telle fonction permet de s'affranchir d'une contrainte sur l'ordre des sous-zones pour le calcul de la signature par composition des signatures élémentaires. Ainsi, le dispositif externe et l'élément sécurisé peuvent affecter différemment des portions de données à charger, aux sous-zones composant la zone mémoire de code.

Dans des modes particuliers de réalisation de l'invention, le calcul de la signature comprend une composition des P signatures élémentaires dans un ordre prédéfini de leurs sous-zones correspondantes. Cet ordre peut par exemple être fixé par des identifiants propres aux sous-zones ou au contenu de ces sous-zones (i.e. l'ensemble des bits de la sous-zone, parfois appelé module), par exemple un ordre croissant ou décroissant des identifiants.

Dans des modes particuliers de réalisation de l'invention, les données comprennent un script pour la mise en oeuvre par l'élément sécurisé, d'une étape de chargement dans une partie de la zone mémoire de code, de données reçues du dispositif externe, d'une étape de calcul d'une signature de l'ensemble de la zone mémoire de code une fois les données reçues chargées, et d'une étape de vérification de la signature calculée à l'aide d'une signature reçue du dispositif externe, de sorte à autoriser l'exécution du contenu de la zone mémoire de code uniquement si ces deux signatures sont identiques.

Dans des modes particuliers de réalisation de l'invention, la zone mémoire de code comprend des éléments logiciels avant le chargement des données (obtenues par le dispositif externe et reçues du dispositif externe par l'élément sécurisé).

Ainsi, l'image simulée de la zone mémoire de code après chargement prend en compte les données qui auraient été chargées précédemment dans la zone mémoire de code, lors de son état initial (motif binaire susmentionné) ou au cours du fonctionnement de l'élément sécurisé.

Dans des modes particuliers de réalisation de l'invention, les données à charger dans la zone mémoire de code représentent une partie seulement de l'espace disponible dans la zone mémoire de code.

Par exemple, les données (l'ensemble des blocs de code) à charger peuvent occuper seulement la moitié ou un quart des bits constituant la zone mémoire de code. Un troisième aspect de l'invention concerne un dispositif de sécurisation du chargement de données dans une mémoire non-volatile d'un élément sécurisé, ladite mémoire non-volatile comprenant une zone mémoire, dite zone mémoire de code, définie par un programme initial de l'élément sécurisé et toute modification est contrôlée uniquement par ledit programme initial, le dispositif étant externe à l'élément sécurisé et comprenant :
- un module d'obtention de données à transmettre à l'élément sécurisé, lesdites données représentant une partie seulement de l'espace disponible dans la zone mémoire de code;
- un module de simulation d'une image de la zone mémoire de code modifiée par le chargement des données obtenues dans cette zone mémoire de code de l'élément sécurisé ;
- un module de calcule d'une signature de l'image simulée de la zone mémoire de code dans son ensemble ; et
- un module de transmission, audit élément sécurisé, des données obtenues et de la signature calculée.

Dans des modes particuliers de réalisation, les différentes étapes des procédés précités sont déterminées par des instructions de programmes d'ordinateurs.

En conséquence, l'invention vise aussi un programme d'ordinateur sur un support d'informations, ce programme étant susceptible d'être mis en oeuvre par un microprocesseur, ce programme comprenant des instructions adaptées à la mise en oeuvre des étapes des procédés tels que mentionnés ci-dessus. Il s'agit par exemple d'un programme initial tel que précité.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Un quatrième aspect de l'invention concerne un élément sécurisé comprenant un microprocesseur et comprenant, en mémoire, un programme initial tel que précité. L'élément sécurisé est par exemple conforme aux standards ISO/IEC 7816 , aux normes Critères Communs et/ou à la norme *GlobalPlatform Card Spécification* v 2.2.1.

Un cinquième aspect de l'invention concerne un système comprenant un tel élément sécurisé et un dispositif de sécurisation tel qu'évoqué ci-dessus, le dispositif externe pour l'élément sécurisé étant le dispositif de sécurisation.

Les avantages, buts et caractéristiques particulières du dispositif de sécurisation, de l'élément sécurisé, du système, du support d'informations et du programme d'ordinateur précités sont similaires à ceux des procédés qu'ils mettent en oeuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- les **Figures 1a** et **1b** illustrent des exemples de contexte de mise en oeuvre de modes de réalisation ;
- la **Figure 2** représente un exemple d'architecture pour les dispositifs représentés sur les Figures 1a et 1b ;
- la **Figure 3** est composée des **Figures 3a** et **3b** représentant sous forme d'organigrammes, les principales étapes de procédés de sécurisation selon des modes réalisation.

### DESCRIPTION DETAILLEE DE L'INVENTION

De façon générale, l'invention concerne la sécurisation du chargement de données en provenance d'un dispositif externe dans une mémoire non-volatile d'un élément sécurisé, en particulier dans une zone mémoire, dite zone mémoire de code, définie par un programme initial de l'élément sécurisé et dont toute modification est contrôlée uniquement par ce programme initial, et susceptible de contenir du code compilé ou interprété.

Par code compilé ou interprété, on entend tout ensemble de données contenant un programme et identifié par le système (ici l'élément sécurisé) en tant que tel, et notamment un programme en langage machine dont les instructions ou mots de codes (« bytecodes » ou binaire) sont exécutés directement par le processeur du système.

Tel que précité, la zone mémoire de code, notamment sa taille, est gérée par un programme initial ou « de base » de l'élément sécurisé. Il est à noter que le programme initial prend généralement la forme d'un système d'exploitation propre au fabricant du système, ici l'élément sécurisé, ce système d'exploitation particulier fonctionnant indépendamment de la zone mémoire de code sujette à la sécurisation selon l'invention.

Conformément à la présente invention, lorsque un dispositif externe obtient des données à transmettre à l'élément sécurisé, par exemple sur requête de ce dernier parce que ces données sont typiquement mises à disposition par le dispositif externe (parfois appelé dispositif de mise à jour), le dispositif externe simule une image de la zone mémoire de code de l'élément sécurisé telle qu'elle serait modifiée par le chargement intégral des données en question. Une « image » d'une zone mémoire définit la valeur et l'emplacement de chaque bit de cette zone mémoire. Une signature est ensuite calculée à partir de cette image simulée, puis envoyée à l'élément sécurisé avec lesdites données.

Cette signature est ensuite utilisée par l'élément sécurisé pour vérifier que la zone mémoire de code, dans son entièreté, est intègre une fois le chargement des données terminé. En effet, cette zone mémoire de code est sensée être identique à l'image simulée par le dispositif externe. Ainsi selon l'invention, le programme initial de l'élément sécurisé calcule lui aussi une signature sur l'ensemble de la zone mémoire de code après le chargement intégral des données éventuellement demandées, pour la comparer à la signature reçue.

L'identité entre les signatures calculées respectivement par le dispositif externe sur l'image attendue (simulée) de la zone mémoire de code après le chargement des données en question, et par le programme initial de l'élément sécurisé sur la zone mémoire après le chargement effectif des données en question permet ainsi d'assurer que la zone mémoire de code est bien conforme à l'image simulée par le dispositif externe, et donc intègre.

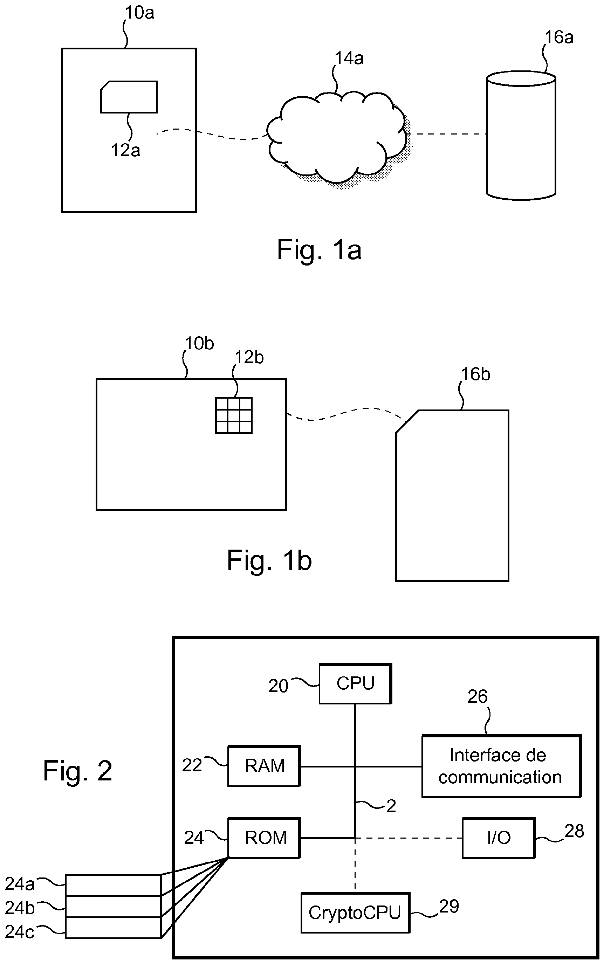

Les **Figures 1a** et **1b** illustrent schématiquement des exemples de contexte de mise en oeuvre de modes de réalisation.

Sur la **Figure 1a****,** un élément sécurisé 12a, intégré ou embarqué dans un dispositif hôte 10a, est configuré pour échanger des données avec un dispositif externe 16a.

L'élément sécurisé 12a est par exemple conforme aux standards ISO/IEC 7816, aux normes Critères Communs et/ou à la norme *GlobalPlatform Card Specification* v 2.2.1.

L'élément sécurisé 12a est par exemple un module d'identification de souscripteur à un réseau 14a, type carte SIM ou carte UICC. Le dispositif hôte 10a est par exemple un terminal mobile, notamment un téléphone mobile intelligent ou *Smartphone* en anglais. Le dispositif externe 16a est un serveur (de mise à jour) connecté au réseau 14a.

Le réseau 14a est par exemple un réseau mobile supportant des communications de données et/ou Internet. Ainsi, dans cet exemple de contexte, le terminal mobile 10a et le serveur 16b communiquent via le réseau 14a, à l'aide du module d'identification 12a.

La **Figure 1b** illustre un autre contexte de mise en oeuvre de modes de réalisation, dans lesquels un élément sécurisé 12b d'une carte 10b, notamment une carte bancaire ou une carte d'accès électronique, est configuré pour échanger des données avec un dispositif externe 16b.

Dans cet exemple, l'élément sécurisé 12b comprend de moyens de communication selon le protocole de communication en champ proche NFC (type étiquette RFID), et le dispositif externe 16b est un lecteur de carte également capable de communiquer selon le protocole NFC (type lecteur RFID).

En variante, l'élément sécurisé et le dispositif externe peuvent communiquer en Bluetooth, ou par infra-rouge.

Les contextes illustrés par les Figures 1a et 1b ne sont pas incompatibles. Des caractéristiques présentées dans un contexte peuvent être mises en oeuvre dans l'autre. Aussi, l'invention ne se limite pas aux contextes décrits ci-dessus. Par exemple, l'invention peut aussi être avantageusement utilisée dans un contexte dans lequel un élément sécurisé est embarqué ou intégré dans un dispositif hôte équipé de moyens de communication selon le protocole NFC, avec un dispositif externe lui-même équipé de moyens de communication similaires. L'élément sécurisé embarqué ou intégré peut également comprendre des moyens de communication selon le protocole NFC, utilisés pour communiquer avec le dispositif hôte.

Selon des modes de réalisation de l'invention, l'élément sécurisé envoie une requête d'obtention de données (par exemple une application ou une partie d'application, notamment une mise à jour) au dispositif externe. En réponse à cette requête, le dispositif externe envoie les données demandées à l'élément sécurisé, par exemple par l'intermédiaire du dispositif hôte dans lequel celui-ci est intégré ou embarqué. Ces données peuvent être sensibles ou non, c'est-à-dire qu'elles peuvent permettre, lors de leur exécution, par exemple de manipuler des données d'un utilisateur.

Ces données visent à être mémorisées (chargées) dans une partie de la mémoire non-volatile de l'élément sécurisé, appelée zone mémoire de code, définie par un programme initial de l'élément sécurisé et dont toute modification est contrôlée uniquement par ce programme initial, et susceptible de contenir du code compilé ou interprété.

Une signature calculée par le dispositif externe est envoyée avec les données demandées. Selon l'invention, cette signature a la particularité de refléter l'image de l'ensemble de la zone mémoire de code telle qu'elle devrait se trouver après le chargement intégral des données demandées.

Préférentiellement, avant tout premier chargement de données, la zone de code est « randomisée ». Autrement dit, des valeurs aléatoires sont enregistrées de manière aléatoire dans la zone de code. Cet état de la zone de code est connu du dispositif externe, afin qu'il puisse calculer une signature reflétant l'image de l'ensemble de la zone mémoire de code telle qu'elle devrait se trouver après le chargement intégral des données.

Une fois le chargement des données demandées effectué, le programme initial de l'élément sécurisé calcule lui-même une signature sur la zone mémoire de code telle qu'effectivement modifiée par le chargement des données demandées, afin de s'assurer que l'ensemble de la zone mémoire de code a bien l'aspect attendu, c'est-à-dire est intègre.

La **Figure 2** représente un exemple d'architecture pour les dispositifs représentés sur la Figure 1a ou 1b, c'est-à-dire l'élément sécurisé 12a ou 12b, le dispositif externe 16a ou 16b et/ou le dispositif hôte 10a ou 10b.

Selon cette architecture, un dispositif peut comprendre un bus de communication 2 relié aux éléments suivants :
- une unité de traitement 20 notée CPU (sigle de *Central Processing Unit* en anglais), pouvant comporter un ou plusieurs processeurs;
- une mémoire vive 22 ou mémoire cache ou mémoire volatile par exemple RAM (acronyme de *Random Access Memory* en anglais) ;
- une ou plusieurs mémoires non-volatiles 24 ; et
- une interface de communication 26.

La mémoire vive 22 comprend des registres adaptés à l'enregistrement des variables et paramètres créés et modifiés au cours de l'exécution d'un programme informatique comprenant des instructions pour la mise en oeuvre des procédés selon l'invention lors de sa mise en oeuvre. Les codes d'instructions du programme stocké en mémoire non-volatile sont chargés en mémoire RAM en vue d'être exécutés par l'unité de traitement CPU.

La ou les mémoires non-volatiles 24 sont par exemple des mémoires réinscriptibles de type EEPROM ou mémoire Flash pouvant constituer un support au sens de l'invention, c'est-à-dire pouvant comprendre un programme informatique comprenant des instructions pour la mise en oeuvre des procédés selon l'invention.

Selon l'invention, dans le cas de l'élément sécurisé, la mémoire ROM 24 peut par exemple être divisée dans trois zones mémoires 24a, 24b, 24c. La zone mémoire 24a comprend par exemple les données utilisateurs telles que des applications (« applets » en anglais) Java, des données de configuration d'une machine virtuelle JavaCard, des mots de passe, des numéros de téléphones, des applications, ou divers paramètres de personnalisation.

La zone mémoire 24b correspond à la zone mémoire de code mentionnée précédemment et est ainsi dédiée au stockage de données et programmes en code compilé ou interprété, par exemple un système d'exploitation de l'élément sécurisé ou tout type d'application en code compilé ou interprété. Il s'agit par exemple d'une machine virtuelle JavaCard, d'un environnement d'exécution JavaCard (« JavaCard Runtime Execution » en anglais), d'applications natives, ou de la plateforme GSM (« Global System for Mobile Communications » framework). Cette zone mémoire ne peut pas être modifiée lors de l'exécution de code compilé ou interprété qu'elle contient, afin d'éviter des erreurs d'exécution. Ce verrouillage de la zone mémoire 24b est garanti par le programme initial de l'élément sécurisé, seul programme susceptible d'apporter des modifications à la zone mémoire de code 24b après avoir désactivé temporairement cette dernière.

La zone mémoire 24b dans son état initial, c'est-à-dire lors de sa fabrication, est vierge. Un motif binaire est appliqué à la zone mémoire 24b dans son état initial avant tout chargement ou installation de code compilé ou interprété. Ce motif est par exemple constitué de bits tous égaux à zéro ou tous égaux à un. En variante, ce motif peut être constitué de certains bits à zéro et d'autres bits à un, permettant ainsi de complexifier l'image des bits de la zone mémoire 24b dans son état initial, et d'améliorer la sécurité de cette zone mémoire. Notamment, un motif randomisé comme évoqué précédemment peut être appliqué.

Cette image initiale est connue notamment du dispositif de mise à jour externe 16a/16b, ce qui lui permet de suivre précisément l'évolution des bits de la zone mémoire 24b, et donc l'évolution de l'image de cette zone mémoire 24b constituée de l'ensemble des bits de la zone mémoire 24b, au fur et à mesure des chargements de nouveaux éléments logiciels en code compilé ou interprété dans cette zone mémoire.

La zone mémoire 24c non modifiable comprend le programme initial de l'élément sécurisé, configuré pour contrôler la taille et l'intégrité de la zone mémoire de code 24b, conformément à l'invention. Le programme initial fixe la taille de la zone mémoire de code 24b par exemple en définissant une adresse mémoire de début de zone 24b et une adresse mémoire de fin de zone 24b. Ces adresses sont mémorisées par exemple dans des clés de registre du programme initial.

Le programme initial contrôle également l'activation et la désactivation des éléments logiciels en code interprété de la zone mémoire de code 24b. En d'autres termes, le programme initial est le seul à pouvoir autoriser ou interdire l'exécution de code compilé ou interprété stocké dans la zone mémoire 24b. Notamment, il désactive toute exécution dans la zone mémoire 24b lorsque l'un des éléments logiciels doit être mis à jour ou lorsque de nouvelles données doivent y être chargées.

Le programme initial comprend également des mécanismes de mise à jour de la zone mémoire de code 24b, mécanismes configurés pour exécuter des commandes ou scripts de mise à jour pour le chargement de blocs binaires en code interprété, dans cette zone mémoire de code 24b.

La mémoire ROM peut être divisée en plus que trois zones, tous les éléments logiciels en code compilé ou interprété de l'élément sécurisé étant néanmoins obligatoirement mémorisés dans la zone mémoire de code 24b dédiée.

L'interface de communication 26 est adaptée à transmettre et à recevoir des données, par exemple via un réseau de télécommunications ou une interface de lecture/écriture. C'est par exemple via cette interface que le dispositif externe et l'élément sécurisé envoient/reçoivent des données et leur signature. C'est également par cette interface que le dispositif hôte peut transmettre la requête d'obtention de données en provenance de l'élément sécurisé et recevoir ces données du dispositif externe à destination de l'élément sécurisé.

De façon optionnelle, cette architecture (typiquement pour le dispositif hôte 10a) comprend également une interface d'entrées/sorties 28 I/O (pour *Input*/*Output* en anglais), par exemple un écran, un clavier, une souris ou un autre dispositif de pointage tel qu'un écran tactile. Cette interface permet par exemple à un utilisateur de demander une mise à jour d'un système d'exploitation ou d'une application en code compilé ou interprété déjà en mémoire ou le chargement d'un nouveau système d'exploitation ou d'une nouvelle application en code compilé ou interprété.

De façon optionnelle, cette architecture (typiquement pour le dispositif externe 16a ou 16b, et l'élément sécurisé 12a ou 12b) comprend également un crypto-processeur 29 recevant des instructions de la part de l'unité de traitement 20 pour crypter/décrypter des messages incluant par exemple une signature ou des données du fichier exécutable en compilé ou interprété. Ce cryptage sécurise la transmission des données et signatures sur le réseau 14a.

Le bus de communication permet la communication et l'interopérabilité entre les différents éléments inclus dans le dispositif ou reliés à lui. La représentation du bus n'est pas limitative et, notamment, l'unité de traitement est susceptible de communiquer des instructions à tout élément du dispositif directement ou par l'intermédiaire d'un autre élément de ce dispositif.

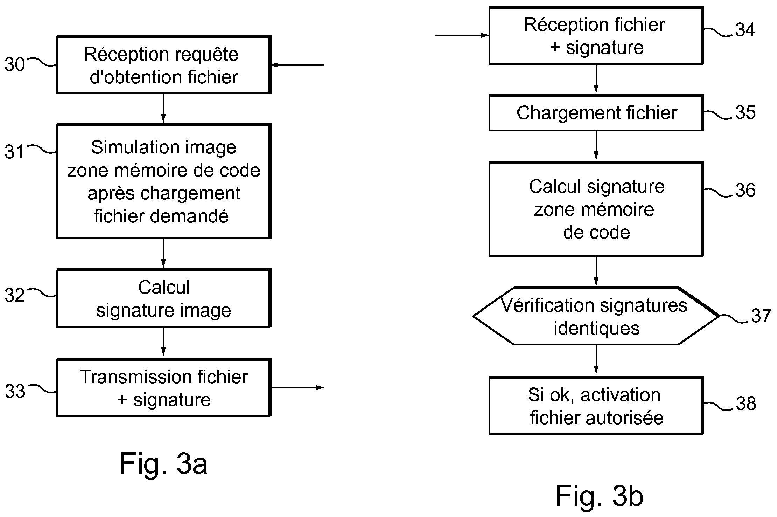

La **Figure 3a** représente les principales étapes d'un procédé de sécurisation conforme à des modes de réalisation, ces étapes étant mises en oeuvre par un dispositif externe (e.g. dispositif 16a ou 16b de la Figure 1). La **Figure 3b** représente les principales étapes d'un procédé de sécurisation conforme à des modes de réalisation, ces étapes étant mises en oeuvre par un élément sécurisé (e.g. élément sécurisé 12a ou 12b de la Figure 1), notamment par le programme initial ou un module de chargement prévu dans le programme initial.

Sur la **Figure 3a****,** au cours d'une étape 30, le dispositif externe reçoit une requête d'obtention de données, envoyée par l'élément sécurisé.

Plusieurs mécanismes conduisant à l'envoi de la requête peuvent être envisagés, certains automatiques et d'autres résultant d'actions spontanées d'un utilisateur.

A titre d'exemple non limitatif, et tel que décrit précédemment en référence à la Figure 2, un utilisateur d'un dispositif hôte, par exemple du terminal mobile 10a de la Figure 1a, déclenche la génération et l'envoi de cette requête. Par exemple, l'utilisateur peut, par l'intermédiaire d'un clavier ou d'un écran tactile du terminal mobile 10a, demander au terminal mobile de vérifier s'il existe, sur le dispositif de mise à jour externe, une version plus récente d'une application ou d'un système d'exploitation que celle actuellement installée sur la carte SIM disposée dans le terminal mobile. Dans ce cadre, le terminal mobile 10a interroge l'élément sécurisé afin de connaître la version actuelle de ce système d'exploitation ou de cette application, par exemple au travers des commandes « Select(*Program*) » (où *Program* correspond au système d'exploitation ou à l'application à vérifier) et « GetData(9F7Fh) » ou 9F7Fh est un paramètre caractérisant des données de traçabilité, par exemple des données dites « Card Production Life Cycle », puis transmet cette information au dispositif de mise à jour externe afin d'être informé en retour de l'existence ou non d'une version plus récente, par exemple de manière spontanée en utilisant une commande PING.

En variante, la vérification des versions, impliquant les mêmes échanges, peut être automatique au démarrage du terminal.

Dans une autre variante, le dispositif externe peut informer spontanément, par un mécanisme de *push,* le terminal et l'élément sécurisé de l'existence d'une nouvelle version d'un système d'exploitation ou d'une application.

Une fois informé par le dispositif de mise à jour de l'existence d'une version plus récente, le terminal transmet cette information à l'élément sécurisé qui peut alors envoyer la requête d'obtention de la version plus récente (c'est-à-dire d'une mise à jour) d'une partie ou de l'ensemble du code du système d'exploitation ou de l'application.

Alternativement, les communications entre l'élément sécurisé et le dispositif externe sont directes pour l'ensemble de la description ci-dessous. Ainsi, le terminal transmet les données et messages échangés (notamment l'information selon laquelle une mise à jour est disponible) sans les interpréter, jouant un simple rôle de relais.

Dans des modes de réalisation, cette requête d'obtention comprend une information permettant d'identifier l'élément sécurisé, par exemple un identifiant unique de l'élément sécurisé. Cet identifiant unique permet par exemple au dispositif de mise à jour, et à l'aide d'une base de données associée, de retrouver la configuration logicielle courante ou « actuelle » de l'élément sécurisé, et notamment de la zone mémoire de code 24b. En effet, une telle base de données peut être utilisée pour stocker l'historique des installations mises en oeuvre et des mises-à-jour de l'élément sécurisé, ainsi qu'une indication sur la mise en oeuvre de ces installations et mises à jour. Cette indication est par exemple un script d'installation indiquant les adresses mémoire ou emplacements de mémorisation des données à charger.

En variante, la requête d'obtention comprend un identifiant de la configuration logicielle actuelle de la zone mémoire de code 24b de l'élément sécurisé.

Il s'agit par exemple d'un identifiant unique de configuration logicielle auquel est associé, dans une base de données associée au dispositif externe, l'historique des chargements effectués dans la zone mémoire 24b de l'élément sécurisé.

Grâce à cet identifiant, et donc à l'historique associé, il est possible de connaître les éléments logiciels actuellement mémorisés dans la zone mémoire 24b mais également ceux chargés au préalable et supprimés depuis, ainsi que l'ordre dans lequel ces éléments logiciels se sont succédés au sein de la zone mémoire de code 24b.

Grâce à cet historique, il est possible de retrouver l'ensemble des informations qui se sont succédées aux différents emplacements de la zone mémoire de code 24b, en particulier à chaque bit de la zone mémoire 24b prise dans son ensemble. Ainsi, la configuration logicielle identifiée par cet identifiant unique est représentative de l'image courante de la zone mémoire de code 24b de l'élément sécurisé, c'est-à-dire de la valeur et l'emplacement de chacun des bits tenant compte notamment de éléments logiciels historiquement chargés mais supprimés depuis sans néanmoins avoir été écrasés (ils sont donc toujours en mémoire).

A titre d'exemple, cet identifiant de configuration logicielle peut découler de données CPLC (pour *Card Production Life Cycle* en anglais) récupérées de l'élément sécurisé, et qui peuvent être transmises régulièrement au dispositif externe à l'aide d'une commande PING. Les données CPLC comprennent notamment un identifiant du fabricant de l'élément sécurisé, le type d'élément sécurisé, un identifiant du système d'exploitation, et la version actuelle de celui-ci. Elles permettent au dispositif externe de retrouver l'image courante de la zone mémoire de code 24b de l'élément sécurisé d'où sont récupérées ces informations.

En variante, la requête d'obtention peut comprendre les informations nécessaires suffisant à la reconstruction d'une image de la zone mémoire, sans avoir recours à la récupération de données supplémentaires dans une base de données associée.

Au cours d'une étape 31, le dispositif externe récupère les données demandées (par exemple d'une zone de stockage interne ou d'un dispositif tiers), puis simule une image des bits de la zone mémoire de code 24b tels qu'ils devraient être après le chargement des données demandées. En d'autres termes, le dispositif externe simule l'emplacement et la valeur de chacun des bits de la zone mémoire de code 24b tels qu'ils seraient modifiés ou non par le chargement du code compilé ou interprété constituant les données demandées.

Le chargement des données demandées peut notamment suivre un script d'installation ou de chargement (possiblement généré par le dispositif externe), reçu par l'élément sécurisé, et comprenant un ensemble de commandes définissant des emplacements spécifiques pour tout ou partie des données demandées. A titre d'exemple, le script d'installation peut inclure un fichier ALV pour *address-length-value* en anglais (adresse mémoire-longueur-valeur) indiquant les emplacements (adresse mémoire et longueur) où doivent être stockées les données (valeur). Ainsi, le dispositif externe est capable de reproduire, par simulation, l'installation ou chargement des données demandées de façon identique à ce que l'élément sécurisé fera à réception du script d'installation.

L'image simulée prend ainsi en compte les bits qui seront modifiés par le chargement des données demandées, ainsi que ceux qui ne seront pas modifiés par ce chargement.

En pratique, un script d'installation établi par le dispositif externe peut comprendre un ensemble de commandes visant à modifier le contenu de la zone mémoire de code 24b, par exemple sa taille pour étendre ou réduire la capacité de stockage de code compilé ou interprété, et/ou les paramètres d'installation (fichier ALV susmentionné) des données demandées, permettant ainsi de charger chaque bit de données à un emplacement précis (i.e. à une adresse précise) de la zone mémoire de code. Le dispositif externe peut ainsi privilégier, pour chaque bit de données, un emplacement par rapport à un autre, par exemple pour remplacer les bits d'une ancienne version d'un élément logiciel par les bits de la nouvelle version de cet élément logiciel.

Bien que le script d'installation soit présenté séparément des données à charger, ces dernières peuvent faire partie intégrante du script d'installation. Ainsi, le script peut inclure un ou plusieurs blocs ou encore l'ensemble du code compilé ou interprété constituant les données, aux valeurs du fichier ALV susmentionné.

En outre, le script d'installation peut inclure des commandes pour l'établissement d'un canal sécurisé entre le terminal hôte et l'élément sécurisé, et prévoir l'authentification mutuelle de ceux-ci. A titre d'exemple, ces commandes sont conformes à la spécification GP 2.2.1 Amd D v1.1 (SCP03) afin qu'un canal sécurisé reposant sur des clés de session générées à partir d'une valeur pseudo-aléatoire (typiquement basée sur un identifiant des données CPLC ci-dessus) soit mis en oeuvre lors du chargement des données demandées. En effet, le canal sécurisé établi selon cette spécification présente l'avantage de permettre la pré-génération d'une série de commandes pour transmettre les éléments mentionnés ci-avant (signature, blocs de code compilé ou interprété, etc.), notamment une commande « Store Data » pour chaque entrée du fichier ALV.

Au cours d'une étape 32, une signature de l'image simulée de l'ensemble des bits de la zone mémoire de code 24b est ensuite calculée par le dispositif externe. Cette signature est fonction de la nouvelle valeur des bits modifiés par le chargement des données demandées, mais également des bits de la zone mémoire de code qui sont situés en dehors des emplacements modifiés par ce chargement. Ces derniers emplacements peuvent contenir le code interprété d'autres données (éléments logiciels) chargées auparavant ou encore le motif binaire initial, c'est-à-dire correspondant à l'image des bits de la zone mémoire de code dans son état initial i.e. lorsque celle-ci est vierge.

Il est à noter qu'entre l'éventuel chargement précédent, et le chargement effectif des données demandées dans la zone mémoire de code 24b de l'élément sécurisé, les bits situés en dehors des emplacements modifiés ne doivent pas avoir subi de modification d'emplacement ou de valeur par rapport à la zone mémoire de code. Ces modifications, anormales (malveillantes, ou fruit d'une erreur logique lors de l'exécution du script de chargement), auraient pour conséquence de modifier une signature (décrite par la suite) de la zone mémoire de code 24b calculée par l'élément sécurisé par rapport à la valeur attendue calculée sur l'image simulée de la zone mémoire 24b et caractérisant une image de la zone mémoire dépourvue de telles modifications.

En pratique, cette signature est par exemple un code d'authentification de message MAC (pour *Message Authentification Code* en anglais), un Hash-MAC, le résultat d'une fonction de hachage (*hash*) par exemple de type SHA-2, ou encore le résultat de l'application d'un code de redondance cyclique. La signature peut être calculée sur l'image simulée des bits d'un seul bloc de code, ou sur des portions binaires découpant l'image simulée des bits de l'ensemble de la zone mémoire 24b.

Dans des modes particuliers de réalisation, le dispositif externe divise virtuellement la zone mémoire de code en un nombre P de sous-zones et calcule une signature élémentaire pour chaque portion d'image correspondant à une des P sous-zones. La signature de l'image de l'ensemble de la zone mémoire de code est ensuite obtenue par composition des P signatures élémentaires calculées.

Ainsi, le dispositif externe peut avantageusement ne calculer que les signatures élémentaires correspondant aux sous-zones modifiées par le chargement, et réutiliser les signatures élémentaires des sous-zones qui restent inchangées, lorsque celles-ci ont déjà été calculées antérieurement.

Notamment, le dispositif externe peut gérer le contenu de chaque sous-zone considérée, c'est-à-dire l'ensemble des bits (appelé module) la constituant, de manière indépendante du contenu des autres sous-zones. En d'autres termes, le dispositif externe peut indiquer l'emplacement de chargement d'une partie des données demandées à l'intérieur d'un ou plusieurs modules, sans nécessairement indiquer comment les modules doivent être disposés les uns par rapport aux autres au sein de la zone mémoire de code 24b.

La composition des signatures élémentaires peut être mise en oeuvre à l'aide d'une fonction bijective appliquée aux P signatures élémentaires des P sous-zones. Cela permet de ne pas tenir compte d'un éventuel ordre des sous-zones (et donc des signatures élémentaires correspondantes). Cette fonction bijective peut être fonction d'un secret partagé entre le dispositif externe et l'élément sécurisé. Ainsi, il est impossible d'obtenir la signature de l'ensemble de la zone mémoire à partir des seules signatures élémentaires, c'est-à-dire sans avoir connaissance de la fonction bijective ou du paramètre secret de cette fonction.

Par exemple, un OU exclusif (XOR) peut être utilisé, ou un code MAC peut être calculé sur l'ensemble des signatures élémentaires.

En variante, la signature de l'image de l'ensemble de la zone mémoire de code peut être obtenue par composition des signatures élémentaires dans un ordre prédéfini, par exemple lié à un ordre des sous-zones correspondantes, ou à un ordre de leur contenu (appelé module). Cet ordre prédéfini peut être préalablement mémorisé comme un secret partagé entre le dispositif externe et l'élément sécurisé. A titre d'exemple, les sous-zones peuvent être dotées d'un identifiant (qui peut évoluer dans le temps) et l'ordre peut être celui de l'ordre croissant ou décroissant desdits identifiants de sous-zones.

Au cours d'une étape 33, les données demandées avec le script d'installation généré par le dispositif externe et permettant d'établir un canal sécurisé ainsi que de charger les données demandées, sont envoyés, avec la signature calculée à l'étape 32, au terminal hôte en vue d'être exécuté, c'est-à-dire en vue du chargement des données dans l'élément sécurisé.

En pratique, la signature est envoyée dans une commande cryptée (ou chiffrée), afin d'éviter qu'elle ne soit modifiée ou interceptée avant d'être reçue par l'élément sécurisé. Dans des modes, les données demandées, le script d'installation et la signature sont tous envoyés dans une même commande cryptée (ou chiffrée).

Dans d'autres modes, une demande d'activation des données est envoyée avec la signature dans une commande cryptée.

En pratique, les données demandées, la signature et éventuellement la demande d'activation peuvent être envoyés par SMS (Over-The-Air), par internet, NFC, Bluetooth, par une connexion filaire ou tout autre moyen de communication géré par le dispositif externe et par le destinataire de ces éléments (i.e. l'élément sécurisé et/ou le dispositif hôte).

En ce qui concerne les opérations effectuées par l'élément sécurisé, il a été vu ci-dessus qu'une requête d'obtention de données est envoyée, accompagnée d'un identifiant, pour permettre au dispositif externe de simuler l'image des bits de l'ensemble de la zone mémoire de code 24b de l'élément sécurisé.

Cette requête d'obtention est généralement envoyée par le programme initial stocké en zone mémoire 24c. Par exemple, le programme initial a désactivé, à l'aide d'une commande (par exemple « chmod »), l'ensemble des données (système d'exploitation et applications) stockées dans la zone mémoire de code 24b, de sorte à effectuer une mise à jour de celle-ci ou l'installation de nouvelles données.

Dans ce qui suit, on considérera que c'est le programme initial (ou un module de chargement de ce programme initial) qui réalise les étapes décrites, sauf précision explicite.

Comme évoqué également ci-dessus en lien avec le dispositif externe, le terminal hôte reçoit le script d'installation, les données à charger (incluses dans le script ou non) ainsi que la signature calculée par le dispositif externe.

Le script d'installation tel que reçu est exécuté par le terminal hôte, conduisant à des échanges avec l'élément sécurisé comme décrit ci-après en lien avec la **Figure 3b****.**

Sur la **Figure 3b** relative aux étapes ultérieures effectuées par le programme initial de l'élément sécurisé, au cours d'une étape 34, l'élément sécurisé reçoit les données demandées dans la requête d'obtention ainsi que la signature calculée par le dispositif externe à l'étape 32 et éventuellement une demande d'activation des données demandées, envoyés par le dispositif externe à l'étape 33.

En pratique, le terminal hôte exécute le script d'installation conduisant à une authentification mutuelle entre le terminal hôte et l'élément sécurisé, notamment le programme initial de ce dernier, puis à la mise en oeuvre d'un canal de communication sécurisé entre ces deux entités, à la transmission des données demandées et enfin de la signature numérique calculée par le dispositif externe.

L'authentification mutuelle peut par exemple comprendre les étapes suivantes :
- le terminal hôte envoie au programme initial d'un identifiant du terminal IDterm ;
- le programme initial envoie un nombre aléatoire R1 au terminal ;
- le terminal calcule et transmet un chiffré C1=f(IDterm, R1) au programme initial;
- le terminal transmet un nombre aléatoire R2 au programme initial; et
- le programme initial renvoie un chiffré C2=f(IDterm, R2).

La validation de C1 et C2 par respectivement le programme initial et le terminal hôte permet l'authentification mutuelle de ces deux entités.

Le canal sécurisé selon GP 2.2.1 Amd D v1.1 (SCP03) est alors mis en oeuvre, par exemple à l'aide d'une valeur aléatoire et/ou d'une valeur pseudo-aléatoire (basée sur la valeur aléatoire et les données CPLC) prévues dans le script d'installation par le dispositif externe.

Les données à charger et la signature sont alors envoyées au cours d'une même session de communication entre le terminal hôte et le programme initial. Les données peuvent être transmises en un bloc monolithique, ou en variante en une pluralité de blocs indépendants, à l'aide par exemple d'une ou de plusieurs commandes « Store Data » de SCP03 reprenant les triplets ALV.

A noter que le chargement sécurisé des données demandées dans l'élément sécurisé depuis le terminal hôte peut se faire indépendamment du dispositif externe, c'est-à-dire sans que le terminal hôte ne soit nécessairement connecté au dispositif externe. Cela est rendu possible grâce au script d'installation transmis par le dispositif externe et que le terminal peut exécuter de façon décorrélée à sa réception, par exemple lors d'un prochain redémarrage de l'élément sécurisé lorsque le programme initial prend la main sur ce dernier.

D'autres commandes prévues dans le script d'installation peuvent être également transmises à l'élément sécurisé pour exécution, par exemple des commandes visant à réduire ou étendre la zone mémoire de code 24b, et une commande visant à activer les données chargées.

Au cours d'une étape 35, les données demandées sont ensuite chargées dans la zone mémoire de code 24b de l'élément sécurisé, de façon monolithique ou par bloc. En pratique, le script d'installation précité est exécuté par le chargeur du programme initial, conduisant au chargement et à l'installation des données demandées, soit par chargement d'un bloc monolithique, soit par chargement progressif de blocs successifs suivant les instructions d'emplacement de stockage ALV.

Lorsque la zone mémoire de code est partitionnée en un nombre P de sous-zones tel que mentionné ci-avant, selon le contenu du script d'installation, une sous-zone peut être modifiée par le chargement d'un bloc ou de plusieurs blocs de code compilé ou interprété, constituant les données à charger. D'autres sous-zones peuvent ne pas être modifiées, c'est-à-dire qu'aucun chargement n'est réalisé dans ces sous-zones lors de la présente opération de chargement des données demandées. Dans le cas où la zone mémoire de code est partitionnée en sous-zones, les adresses mémoire pour le chargement d'un bloc peuvent être exprimées relativement à une adresse mémoire de début d'une sous-zone particulière.

L'avantage du chargement bloc par bloc est que chaque bloc peut être chargé indépendamment des autres blocs.

Le chargement peut par exemple consister en mémorisant directement un bloc à l'adresse mémoire indiquée dans le script d'installation. Ainsi, lors d'une mise à jour d'un élément logiciel, ce type de chargement consiste en un remplacement direct du bloc à mettre à jour.

En variante, le bloc à charger peut être mis en attente dans une partie de la zone mémoire de code 24b dédiée au stockage temporaire (zone réserve ou *spare memory area* en anglais) avant d'être positionné et stocké à l'emplacement prévu par le script d'installation.

La méthode de chargement (directe ou différée) mise en oeuvre par le programme initial pour la mise à jour de la zone mémoire de code 24b est connue du dispositif externe afin que ce dernier puisse connaitre l'état des bits de la zone réserve formant partie de la zone mémoire de code 24b. Cela garantit que la signature calculée à l'étape 32 est conforme à l'évolution réelle de la zone mémoire 24b dans l'élément sécurisé.

Lorsque les données demandées sont chargées dans leur intégralité (i.e. lorsque le bloc monolithique est chargé ou tous les blocs de code sont chargés selon le cas), c'est-à-dire lorsqu'une session de chargement se termine (à noter qu'une session peut couvrir plusieurs cycles de mise sous tension et mise hors tension de l'élément sécurisé), une étape de calcul (étape 36) d'une signature est mise en oeuvre par le programme initial de l'élément sécurisé.

De manière générale, cette étape est similaire à l'étape 32 mise en oeuvre par le dispositif externe, sauf que la signature est calculée sur l'image courante des bits de l'ensemble de la zone mémoire de code, c'est-à-dire sur la valeur des bits de la zone mémoire de code 24b une fois le chargement des données demandées terminé.

Au contraire de la signature calculée par le dispositif externe à partir d'une simulation des bits de la zone mémoire de code tels qu'ils seraient en principe modifiés après le chargement des données demandées, la signature calculée par le programme initial tient compte de tous les bits de la zone mémoire de code 24b, et donc des éventuelles modifications (malveillantes ou dues à une erreur de chargement) qui pourraient avoir été apportées à la zone 24b.

Lorsque la signature reçue à l'étape 34 est issue d'une composition de signatures élémentaires de sous-zones tel que décrit précédemment, des signatures élémentaires sont également calculées par le programme initial de l'élément sécurisé à l'étape 36, toujours après le chargement effectif des blocs de code pour les sous-zones considérées.

Avantageusement, chaque signature élémentaire peut être calculée dès lors que les blocs de code à charger dans la sous-zone correspondante, s'il y en a, sont effectivement chargés.

Dans ce cas en effet, le contenu (aussi appelé module) de la sous-zone considérée est identique à celui attendu par le dispositif externe. Ainsi, il n'est pas nécessaire d'attendre le chargement intégral des données demandées (donc le chargement dans les autres sous-zones) pour calculer la signature élémentaire de la sous-zone considérée. Il en résulte que les signatures élémentaires peuvent être individuellement calculées au cours de l'exécution du script de chargement des données, réduisant le temps de calcul de la signature globale une fois la fin du chargement atteinte.

Ces signatures élémentaires sont ensuite composées de manière identique à l'étape 32, c'est-à-dire à l'aide d'une fonction bijective ou d'une composition dans un ordre prédéfini selon la méthode de composition utilisée à l'étape 32. Le programme initial et le dispositif externe sont configurés pour réaliser une même composition. Le cas échéant, ils peuvent échanger des instructions pour convenir d'une méthode de composition à mettre en oeuvre pour le calcul des signatures.

Une signature de la zone mémoire de code reflétant l'image courante de l'ensemble de la zone mémoire de code telle qu'elle se trouve effectivement après le chargement intégral des données demandées, est ainsi obtenue. Elle intègre donc d'éventuelles modifications inattendues opérées dans la zone mémoire de code 24b.

Au cours d'une étape 37, l'intégrité de la zone mémoire de code 24b est vérifiée en comparant la signature calculée par l'élément sécurisé à l'étape 36 à la signature reçue du dispositif externe à l'étape 34. Il s'agit alors de vérifier que l'ensemble de la zone mémoire de code a bien l'aspect attendu, c'est-à-dire que chaque bit de code des données chargées a la valeur attendue à l'emplacement prévu par le dispositif externe, et que les autres bits de mémoires sont intactes en termes de valeur mais aussi d'emplacement.

Lorsque la signature calculée diffère, cela signifie qu'au moins un bit de mémoire a été modifié (ajouté, supprimé ou modifié) par rapport à la simulation de la zone mémoire de code (c'est-à-dire des bits de l'ensemble de la zone mémoire de code) réalisée par le dispositif externe. Dans ce cas, le programme initial de l'élément sécurisé considère que la zone mémoire de code 24b n'est pas intègre et n'autorise donc pas l'exécution, i.e. n'active pas les données ainsi chargées.

L'élément sécurisé peut alors signaler l'anomalie par exemple au dispositif externe, qui en réponse peut renvoyer de nouvelles données afin de tenter de corriger le défaut d'intégrité (si un bloc de code a été reçu avec des erreurs), ou bien installer une règle logique pour éviter la reproduction de cette faille, lorsque celle-ci est due à un dysfonctionnement logique identifié, par exemple lorsque du code compilé ou interprété est enregistré durablement dans la zone de réserve alors que cette zone ne doit être utilisée que ponctuellement comme zone tampon (*buffer*). En variante, la signature peut être recalculée par le programme initial l'élément sécurisé puis vérifier à nouveau après un nouveau démarrage de l'élément sécurisé.

Lorsque la signature calculée par l'élément sécurisé et la signature reçue du dispositif externe sont identiques, le programme initial de l'élément sécurisé autorise l'exécution, i.e. active les données ainsi chargées (étape 38). A titre d'exemple, le programme initial peut exécuter une commande de changement de mode « chmod » afin de modifier les droits en exécution (par exemple « chmod +x »).

Selon divers modes de réalisation, les données chargées peuvent être activées (c'est-à-dire rendu exécutable) immédiatement, ou l'activation peut n'avoir lieu qu'au prochain démarrage de l'élément sécurisé. Ce dernier mode a l'avantage de ne pas interrompre le fonctionnement de l'élément sécurisé lorsque les données en question correspondent à une mise à jour de son système d'exploitation.

Dans des modes de réalisation, de nouvelles étapes de calcul de signature (étape 36) et de vérification (étape 37) sont mises en oeuvre au cours du fonctionnement de l'élément sécurisé (par exemple périodiquement, indépendamment des mises hors tension de l'élément sécurisé) afin de vérifier continuellement que la zone mémoire de code est toujours intègre. Cela permet de repérer d'éventuelles modifications malveillantes de la zone mémoire de code qui seraient survenues postérieurement à la dernière session de chargement. Ces nouvelles vérifications d'intégrité peuvent se produire à chaque mise en tension de l'élément sécurisé, sur demande d'un tiers (par exemple du dispositif externe ou d'un opérateur de réseau), ou encore à chaque occurrence d'un événement prédéterminé (par exemple requête de l'utilisateur, expiration d'un compteur, réception d'une commande spécifique, faible utilisation du processeur).

Dans le cas d'une détection de défaut d'intégrité de la zone mémoire de code 24b, le programme initial peut décider de désactiver le code interprété de cette zone mémoire et d'avertir le dispositif externe. La réactivation du code interprété n'est opérée qu'à recouvrement d'une zone mémoire de code 24b entièrement intègre.

Les exemples qui précèdent ne sont que des modes de réalisation de l'invention qui ne s'y limite pas.

Par exemple, comme décrit ci-avant, les blocs de données demandées peuvent être transmis au programme initial à l'aide de commandes « Store Data » pour chaque bloc, puis ces blocs peuvent être chargés soit directement aux emplacements mémoire prévus, soit via un stockage temporaire dans une zone mémoire de réserve (étape 35).

Dans une variante, le terminal hôte peut transmettre un nouveau script, dit de mise à jour, que le programme initial exécutera, ce script de mise à jour incluant les différents blocs de code interprété des données demandées ainsi que les indications des emplacements de chargement prévus. Ce script de mise à jour est stocké dans la zone mémoire de réserve de la zone 24b, avant d'être exécuté par le programme initial, afin de modifier la zone mémoire de code 24b par le chargement progressif des différents blocs de code interprété des données demandées.

Par ailleurs, dans les exemples qui précèdent, l'élément sécurisé émet une requête d'obtention (étape 30). Dans des variantes de l'invention, le dispositif externe pousse les données vers l'élément sécurisé selon le mécanisme connu par l'anglicisme « push » qui ne requiert pas la requête susmentionnée. Dans ces variantes, le dispositif externe connaît l'historique des chargements pour l'élément sécurisé (grâce par exemple à la base de données mentionnée) et, lorsqu'il dispose par exemple d'une mise à jour pertinente pour l'élément sécurisé, il est capable de réaliser la simulation de l'image de la zone mémoire de code, le calcul de la signature (via les signatures élémentaires le cas échéant) et la transmission en mode « push » de l'ensemble à l'élément sécurisé.

## Revendications

1. Procédé de sécurisation du chargement de données dans une mémoire non-volatile (24) d'un élément sécurisé (12a ; 12b), ladite mémoire non-volatile comprenant une zone mémoire (24b), dite zone mémoire de code, définie par un programme initial de l'élément sécurisé et dont toute modification est contrôlée uniquement par ledit programme initial, ledit procédé comprenant les étapes suivantes mises en oeuvre par un dispositif externe (16a ; 16b) à l'élément sécurisé (12a ; 12b) :
- obtenir des données à transmettre à l'élément sécurisé, lesdites données représentant une partie seulement de l'espace disponible dans la zone mémoire de code (24b);
- simuler (31) une image de la zone mémoire de code modifiée par le chargement des données obtenues dans cette zone mémoire de code (24b) de l'élément sécurisé ;
- calculer (32) une signature de l'image simulée de la zone mémoire de code dans son ensemble ; et
- transmettre (33), audit élément sécurisé (12a ; 12b), les données obtenues et la signature calculée.

2. Procédé de sécurisation du chargement de données dans une mémoire non-volatile d'un élément sécurisé (12a ; 12b), ladite mémoire non-volatile comprenant une zone mémoire, dite zone mémoire de code, définie par un programme initial de l'élément sécurisé et dont toute modification est contrôlée uniquement par ledit programme initial, ledit procédé comprenant les étapes suivantes mises en oeuvre par l'élément sécurisé (12a ; 12b) :
- recevoir (34), d'un dispositif externe (16a ; 16b), des données et une signature, lesdites données représentant une partie seulement de l'espace disponible dans la zone mémoire de code ;
- charger (35), dans une partie de la zone mémoire de code (24b), les données reçues du dispositif externe (16a ; 16b) ;
- calculer (36) une signature de l'ensemble de la zone mémoire de code (24b) une fois les données chargées; et
- vérifier (37) la signature calculée à l'aide de la signature reçue, de sorte à autoriser l'exécution du contenu de la zone mémoire de code (24b) uniquement si ces deux signatures sont identiques.

3. Procédé de sécurisation selon l'une quelconque des revendications 1 ou 2, **caractérisé en ce que** lesdites données sont transmises à l'élément sécurisé (12a ; 12b) en réponse à une requête d'obtention des données, et la requête d'obtention comprend une information identifiant l'élément sécurisé.

4. Procédé de sécurisation selon l'une quelconque des revendications 1 à 3, **caractérisé en ce que** lesdites données sont transmises à l'élément sécurisé (12a ; 12b) en réponse à une requête d'obtention des données, la requête d'obtention comprend un identifiant unique de configuration logicielle représentative d'une image courante de la zone mémoire de code (24b) de l'élément sécurisé.

5. Procédé de sécurisation selon l'une quelconque des revendications 1 à 4, **caractérisé en ce que** la signature est transmise à l'élément sécurisé (12a ; 12b) avec une demande d'activation des données obtenues, dans une commande cryptée en provenance du dispositif externe (16a ; 16b).

6. Procédé de sécurisation selon l'une quelconque des revendications 1 à 5, **caractérisé en ce que** les données sont transmises par le dispositif externe (16a ; 16b) avec une indication d'un emplacement ou d'emplacements dans la zone mémoire de code (24b) où les données doivent être chargées.

7. Procédé de sécurisation selon l'une quelconque des revendications 1 à 6, **caractérisé en ce que** ladite zone mémoire de code (24b) est partitionnée en P sous-zones, et **en ce que** l'étape de calcul de la signature comprend l'obtention d'une signature élémentaire pour chaque sous-zone et l'obtention de ladite signature pour l'ensemble de la zone mémoire de code (24b), simulée ou non, par composition des P signatures élémentaires.

8. Procédé de sécurisation selon la revendication 7, **caractérisé en ce que** la composition des P signatures élémentaires comprend l'application d'une fonction bijective.

9. Procédé de sécurisation selon la revendication 7, **caractérisé en ce que** le calcul de la signature comprend une composition des P signatures élémentaires dans un ordre prédéfini de leurs sous-zones correspondantes.

10. Procédé de sécurisation selon l'une quelconque des revendications 1 à 9, **caractérisé en ce que** lesdites données comprennent un script pour la mise en oeuvre par l'élément sécurisé (12a ; 12b), d'une étape de chargement dans une partie de la zone mémoire de code (24b), de données reçues du dispositif externe (16a ; 16b), d'une étape de calcul d'une signature de l'ensemble de la zone mémoire de code (24b) une fois les données reçues chargées, et d'une étape de vérification de la signature calculée à l'aide d'une signature reçue du dispositif externe (16a ; 16b), de sorte à autoriser l'exécution du contenu de la zone mémoire de code (24b) uniquement si ces deux signatures sont identiques.

11. Procédé de sécurisation selon l'une quelconque des revendications 1 à 10, **caractérisé en ce que** ladite zone mémoire de code (24b) comprend des éléments logiciels avant le chargement desdites données.

12. Programme initial comprenant des instructions pour la mise en oeuvre des étapes suivantes, lorsqu'il est chargé et exécuté par un microprocesseur d'un élément sécurisé (12a ; 12b) comprenant une mémoire non-volatile qui, elle, comprend une zone mémoire (24b), dite zone mémoire de code, définie par le programme initial et dont toute modification est contrôlée uniquement par ledit programme initial :
- recevoir, d'un dispositif externe (16a ; 16b), des données et une signature, lesdites données représentant une partie seulement de l'espace disponible dans la zone mémoire de code (24b) ;
- charger, dans une partie de la zone mémoire de code, les données reçues du dispositif externe (16a ; 16b) ;
- calculer une signature de l'ensemble de la zone mémoire de code (24b) une fois les données chargées; et
- vérifier la signature calculée à l'aide de la signature reçue, de sorte à autoriser l'exécution du contenu de la zone mémoire de code (24b) uniquement si ces deux signatures sont identiques.

13. Elément sécurisé (12a ; 12b) comprenant un microprocesseur et comprenant, en mémoire, un programme initial selon la revendication 12.

14. Dispositif de sécurisation du chargement de données dans une mémoire non-volatile d'un élément sécurisé (12a ; 12b), ladite mémoire non-volatile comprenant une zone mémoire (24b), dite zone mémoire de code, définie par un programme initial de l'élément sécurisé et dont toute modification est contrôlée uniquement par ledit programme initial, le dispositif étant externe à l'élément sécurisé et comprenant :
- un module d'obtention de données à transmettre à l'élément sécurisé (12a ; 12b), lesdites données représentant une partie seulement de l'espace disponible dans la zone mémoire de code (24b);
- un module de simulation d'une image de la zone mémoire de code modifiée par le chargement des données obtenues dans cette zone mémoire de code (24b) de l'élément sécurisé ;
- un module de calcul d'une signature de l'image simulée de la zone mémoire de code (24b) dans son ensemble ; et
- un module de transmission, audit élément sécurisé (12a ; 12b), des données obtenues et de la signature calculée.

15. Système comprenant un dispositif de sécurisation selon la revendication 14 et un élément sécurisé (12a ; 12b) selon la revendication 13 pour lequel le dispositif externe (16a ; 16b) est le dispositif de sécurisation.

## Patentansprüche

1. Verfahren zur Sicherung des Ladens von Daten in einen nichtflüchtigen Speicher (24) eines sicheren Elements (12a; 12b), wobei der nichtflüchtige Speicher einen Speicherbereich (24b), Codespeicherbereich genannt, umfasst, der durch ein ursprüngliches Programm des sicheren Elements definiert ist und von dem jede Änderung ausschließlich durch das ursprüngliche Programm gesteuert wird, wobei das Verfahren die folgenden Schritte umfasst, die von einer bezüglich des sicheren Elements (12a; 12b) externen Vorrichtung (16a; 16b) durchgeführt werden:
- Gewinnen der Daten, die zu dem sicheren Element zu übertragen sind, wobei die Daten nur einen Teil des verfügbaren Raumes in dem Codespeicherbereich (24b) repräsentieren;
- Simulieren (31) eines Bildes des Codespeicherbereichs, der durch das Laden der gewonnenen Daten in diesen Codespeicherbereich (24b) des sicheren Elements geändert wurde;
- Berechnen (32) einer Signatur des simulierten Bildes des Codespeicherbereichs in seiner Gesamtheit; und
- Übertragen (33) der gewonnenen Daten und der berechneten Signatur zu dem sicheren Element (12a; 12b) .

2. Verfahren zur Sicherung des Ladens von Daten in einen nichtflüchtigen Speicher eines sicheren Elements (12a; 12b), wobei der nichtflüchtige Speicher einen Speicherbereich, Codespeicherbereich genannt, umfasst, der durch ein ursprüngliches Programm des sicheren Elements definiert ist und von dem jede Änderung ausschließlich durch das ursprüngliche Programm gesteuert wird, wobei das Verfahren die folgenden Schritte umfasst, die von dem sicheren Element (12a; 12b) durchgeführt werden:
- Empfangen (34), von einer externen Vorrichtung (16a; 16b), der Daten und einer Signatur, wobei die Daten nur einen Teil des verfügbaren Raumes in dem Codespeicherbereich repräsentieren;
- Laden (35) der von der externen Vorrichtung (16a; 16b) empfangenen Daten in einen Teil des Codespeicherbereichs (24b);
- Berechnen (36) einer Signatur der Gesamtheit des Codespeicherbereichs (24b), sobald die Daten geladen sind; und
- Überprüfen (37) der berechneten Signatur mithilfe der empfangenen Signatur, um die Ausführung des Inhalts des Codespeicherbereichs (24b) nur dann zu autorisieren, falls diese zwei Signaturen identisch sind.

3. Verfahren zur Sicherung nach einem der Ansprüche 1 oder 2, **dadurch gekennzeichnet, dass** die Daten zu dem sicheren Element (12a; 12b) in Reaktion auf eine Anforderung der Gewinnung der Daten übertragen werden und die Anforderung der Gewinnung eine Information umfasst, die das sichere Element identifiziert.

4. Verfahren zur Sicherung nach einem der Ansprüche 1 bis 3, **dadurch gekennzeichnet, dass** die Daten zu dem sicheren Element (12a; 12b) in Reaktion auf eine Anforderung der Gewinnung der Daten übertragen werden und die Anforderung der Gewinnung eine eindeutige Kennung einer Softwarekonfiguration umfasst, die für ein aktuelles Bild des Codespeicherbereichs (24b) des sicheren Elements repräsentativ ist.

5. Verfahren zur Sicherung nach einem der Ansprüche 1 bis 4, **dadurch gekennzeichnet, dass** die Signatur zu dem sicheren Element (12a; 12b) mit einer Aufforderung zur Aktivierung der gewonnenen Daten in einem verschlüsselten Befehl, der von der externen Vorrichtung (16a; 16b) stammt, übertragen wird.

6. Verfahren zur Sicherung nach einem der Ansprüche 1 bis 5, **dadurch gekennzeichnet, dass** die Daten durch die externe Vorrichtung (16a; 16b) mit einer Angabe eines Ortes oder von Orten in dem Codespeicherbereich (24b), wo die Daten geladen werden sollen, übertragen werden.

7. Verfahren zur Sicherung nach einem der Ansprüche 1 bis 6, **dadurch gekennzeichnet, dass** der Codespeicherbereich (24b) in P Unterbereiche partitioniert wird, und dadurch, dass der Schritt der Berechnung der Signatur die Gewinnung einer elementaren Signatur für jeden Unterbereich und die Gewinnung der Signatur für die Gesamtheit des simulierten oder nicht simulierten Codespeicherbereichs (24b) durch Komposition der P elementaren Signaturen umfasst.

8. Verfahren zur Sicherung nach Anspruch 7, **dadurch gekennzeichnet, dass** die Komposition der P elementaren Signaturen die Anwendung einer bijektiven Funktion umfasst.

9. Verfahren zur Sicherung nach Anspruch 7, **dadurch gekennzeichnet, dass** die Berechnung der Signatur eine Komposition der P elementaren Signaturen in einer vordefinierten Reihenfolge ihrer entsprechenden Unterbereiche umfasst.

10. Verfahren zur Sicherung nach einem der Ansprüche 1 bis 9, **dadurch gekennzeichnet, dass** die Daten ein Skript für die Durchführung, durch das sichere Element (12a; 12b), eines Schrittes des Ladens von Daten, die von der externen Vorrichtung (16a; 16b) empfangen wurden, in einen Teil des Codespeicherbereichs (24b), eines Schrittes der Berechnung einer Signatur der Gesamtheit des Codespeicherbereichs (24b), sobald die empfangenen Daten geladen sind, und eines Schrittes der Überprüfung der berechneten Signatur mithilfe einer von der externen Vorrichtung (16a; 16b) empfangenen Signatur, um die Ausführung des Inhalts des Codespeicherbereichs (24b) nur dann zu autorisieren, falls diese zwei Signaturen identisch sind, umfassen.

11. Verfahren zur Sicherung nach einem der Ansprüche 1 bis 10, **dadurch gekennzeichnet, dass** der Codespeicherbereich (24b) Softwareelemente vor dem Laden der Daten umfasst.

12. Ursprüngliches Programm, welches Anweisungen umfasst zur Durchführung der folgenden Schritte, wenn es geladen und von einem Mikroprozessor eines sicheren Elements (12a; 12b) ausgeführt wird, das einen nichtflüchtigen Speicher umfasst, welcher wiederum einen Speicherbereich (24b), Codespeicherbereich genannt, umfasst, der durch das ursprüngliche Programm definiert ist und von dem jede Änderung ausschließlich durch das ursprüngliche Programm gesteuert wird:
- Empfangen, von einer externen Vorrichtung (16a; 16b), der Daten und einer Signatur, wobei die Daten nur einen Teil des verfügbaren Raumes in dem Codespeicherbereich (24b) repräsentieren;
- Laden der von der externen Vorrichtung (16a; 16b) empfangenen Daten in einen Teil des Codespeicherbereichs;
- Berechnen einer Signatur der Gesamtheit des Codespeicherbereichs (24b), sobald die Daten geladen sind; und
- Überprüfen der berechneten Signatur mithilfe der empfangenen Signatur, um die Ausführung des Inhalts des Codespeicherbereichs (24b) nur dann zu autorisieren, falls diese zwei Signaturen identisch sind.

13. Sicheres Element (12a; 12b), welches einen Mikroprozessor umfasst und im Speicher ein ursprüngliches Programm nach Anspruch 12 umfasst.

14. Vorrichtung zur Sicherung des Ladens von Daten in einen nichtflüchtigen Speicher eines sicheren Elements (12a; 12b), wobei der nichtflüchtige Speicher einen Speicherbereich (24b), Codespeicherbereich genannt, umfasst, der durch ein ursprüngliches Programm des sicheren Elements definiert ist und von dem jede Änderung ausschließlich durch das ursprüngliche Programm gesteuert wird, wobei die Vorrichtung bezüglich des sicheren Elements extern ist und umfasst:
- ein Modul zur Gewinnung von Daten, die zu dem sicheren Element (12a; 12b) zu übertragen sind, wobei die Daten nur einen Teil des verfügbaren Raumes in dem Codespeicherbereich (24b) repräsentieren;
- ein Modul zur Simulation eines Bildes des Codespeicherbereichs, der durch das Laden der gewonnenen Daten in diesen Codespeicherbereich (24b) des sicheren Elements geändert wurde;
- ein Modul zur Berechnung einer Signatur des simulierten Bildes des Codespeicherbereichs (24b) in seiner Gesamtheit; und
- ein Modul zur Übertragung der gewonnenen Daten und der berechneten Signatur zu dem sicheren Element (12a; 12b).

15. System, welches eine Vorrichtung zur Sicherung nach Anspruch 14 und ein sicheres Element (12a; 12b) nach Anspruch 13, für welches die externe Vorrichtung (16a; 16b) die Vorrichtung zur Sicherung ist, umfasst.

## Claims

1. Method of securing the loading of data into a nonvolatile memory (24) of a secure element (12a; 12b), said nonvolatile memory comprising a storage area (24b), called the code storage area, defined by an initial program of the secure element, any modification of which area is controlled solely by said initial program, said method comprising the following steps executed by a device (16a; 16b) external to the secure element (12a; 12b):
- obtaining data to be transmitted to the secure element, said data representing only a part of the available space in the code storage area (24b) ;
- simulating (31) an image of the code storage area modified by the loading of the data obtained into this code storage area (24b) of the secure element;
- calculating a signature (32) of the simulated image of the code storage area as a whole; and
- transmitting (33) the data obtained and the calculated signature to said secure element (12a; 12b) .

2. Method of securing the loading of data into a nonvolatile memory of a secure element (12a; 12b), said nonvolatile memory comprising a storage area, called the code storage area, defined by an initial program of the secure element, any modification of which area is controlled solely by said initial program, said method comprising the following steps executed by the secure element (12a; 12b):
- receiving (34) data and a signature from an external device (16a; 16b), said data representing only a part of the available space in the code storage area;
- loading (35) the data received from the external device (16a; 16b) into a part of the code storage area (24b);
- calculating (36) a signature of the whole code storage area (24b) after the data have been loaded; and
- verifying (37) the calculated signature, using the received signature, in order to enable the execution of the content of the code storage area (24b) solely if these two signatures are identical.

3. Securing method according to either of Claims 1 and 2, **characterized in that** said data are transmitted to the secure element (12a; 12b) in response to a request to obtain data, and the request to obtain data comprises information identifying the secure element.

4. Securing method according to any of Claims 1 to 3, **characterized in that** said data are transmitted to the secure element (12a; 12b) in response to a request to obtain data, and the request to obtain data comprises a unique identifier of software configuration representative of a current image of the code storage area (24b) of the secure element.

5. Securing method according to any of Claims 1 to 4, **characterized in that** the signature is transmitted to the secure element (12a; 12b) with a request for activation of the data obtained, in an encrypted command sent from the external device (16a; 16b).

6. Securing method according to any of Claims 1 to 5, **characterized in that** the data are transmitted by the external device (16a; 16b) with an indication of a location or locations in the code storage area (24b) into which the data obtained are to be loaded.

7. Securing method according to any of Claims 1 to 6, **characterized in that** said code storage area (24b) is partitioned into P sub-areas, and **in that** the step of calculating the signature comprises obtaining an elementary signature for each sub-area and obtaining said signature for the whole code storage area (24b), whether simulated or not, by composition of the P elementary signatures.

8. Securing method according to Claim 7, **characterized in that** the composition of the P elementary signatures comprises the application of a bijective function.

9. Securing method according to Claim 7, **characterized in that** the calculation of the signature comprises a composition of the P elementary signatures in a predefined order of their corresponding sub-areas.

10. Securing method according to any of Claims 1 to 9, **characterized in that** said data comprise a script for the execution by the secure element (12a; 12b) of a step of loading data received from the external device (16a; 16b) into part of the code storage area (24b), a step of calculating a signature for the whole code storage area (24b) when the received data have been loaded, and a step of verifying the calculated signature using a signature received from the external device (16a; 16b), for the purpose of enabling the execution of the content of the code storage area (24b) solely if these two signatures are identical.

11. Securing method according to any of Claims 1 to 10, **characterized in that** said code storage area (24b) comprises software elements before the loading of said data.

12. Initial program comprising instructions for the execution of the following steps, when it is loaded and executed by a microprocessor of a secure element (12a; 12b) comprising a nonvolatile memory which, for its part, comprises a storage area (24b), called the code storage area, defined by the initial program, any modification of which area is controlled solely by said initial program:
- receiving data and a signature from an external device (16a; 16b), said data representing only a part of the available space in the code storage area (24b);
- loading the data received from the external device (16a; 16b) into a part of the code storage area;
- calculating a signature of the whole code storage area (24b) after the data have been loaded; and
- verifying the calculated signature, using the received signature, in order to enable the execution of the content of the code storage area (24b) solely if these two signatures are identical.

13. Secure element (12a; 12b) comprising a microprocessor and comprising, in memory, an initial program according to Claim 12.

14. Device for securing the loading of data into a nonvolatile memory of a secure element (12a; 12b), said nonvolatile memory comprising a storage area (24b), called the code storage area, defined by an initial program of the secure element, any modification of which area is controlled solely by said initial program, the device being external to the secure element and comprising:
- a module for obtaining data to be transmitted to the secure element (12a; 12b) said data representing only a part of the available space in the code storage area (24b);
- a module for simulating an image of the code storage area modified by the loading of the data obtained into this code storage area (24b) of the secure element;
- a module for calculating a signature of the simulated image of the code storage area (24b) as a whole; and
- a module for transmitting the data obtained and the calculated signature to said secure element (12a; 12b).

15. System comprising a securing device according to Claim 14 and a secure element (12a; 12b) according to Claim 13, for which the external device (16a; 16b) is securing device.
